(19) **Europäisches Patentamt**
**European Patent Office**
**Office européen des brevets**

(11) **EP 4 664 207 A1**

(12) **EUROPEAN PATENT APPLICATION**

(43) Date of publication:
**17.12.2025 Bulletin 2025/51**

(21) Application number: **25180182.5**

(22) Date of filing: **02.06.2025**

(51) International Patent Classification (IPC):
**G03H 1/04** *(2006.01)*  **G03H 1/22** *(2006.01)*
**G03H 1/08** *(2006.01)*  **G02B 27/01** *(2006.01)*
**H04N 9/31** *(2006.01)*

(52) Cooperative Patent Classification (CPC):
**G03H 1/0486; G02B 27/0101; G03H 1/2202;**
**H04N 9/3179; H04N 9/3182; H04N 9/3194;**
G02B 2027/0105; G02B 2027/011; G03H 1/0808;
G03H 1/2249; G03H 1/2294; G03H 2001/2244;
G03H 2001/2247; G03H 2001/2252

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **14.06.2024 GB 202408575**

(71) Applicant: **Envisics Ltd**
**Milton Keynes MK1 1PT (GB)**

(72) Inventors:
• **CAN, Chi**
**Milton Keynes, MK1 1PT (GB)**
• **BLEDOWSKI, Ian**
**Milton Keynes, MK1 1PT (GB)**

(74) Representative: **Greenaway, Martin William**
**Apollo House**
**6 Bramley Road**
**Milton Keynes MK1 1PT (GB)**

(54) **A METHOD OF MEASURING THE CONTRAST OF A HOLOGRAPHIC PROJECTOR**

(57) There is provided a method for determining an intensity ratio of a holographic replay field. The method comprises forming a holographic replay field at a plane comprising a housing, wherein the holographic replay field comprises an image area and a non-image area. The method further comprises displaying a first feature at a first position of the holographic replay field. The method further comprises measuring an intensity $I_A$ of the first feature using a first light detector, wherein the first light detector is disposed on the housing. The method further comprises displaying a second feature at a second position of the holographic replay field, wherein the second feature is substantially identical to the first feature and forms a conjugate at the position of a second light detector. The second light detector is disposed on the housing. The method further comprises measuring an intensity $I_{B'}$ of the conjugate image of the second feature using the second light detector. The method further comprises calculating a ratio of the intensities $I_A$, $I_{B'}$ of the first feature and the conjugate image of the second feature.

FIGURE 6

EP 4 664 207 A1

**Description**

FIELD

The present disclosure relates to a method of measuring a holographic replay field. More specifically, the present disclosure relates to a method of measuring the contrast of a holographic replay field. Some embodiments of the method relate to measuring the conjugate contrast of a holographic replay field. Some examples relate to a holographic projection system and a head-up display comprising the holographic projector.

BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

SUMMARY

Aspects of the present disclosure are defined in the appended independent claims.

In general terms, there is provided a holographic projector and a method of calibrating a holographic projector. In particular, there is provided a method of calibration which compensates for rotational misalignments of parts or components of the holographic projector.

A holographic projector may be arranged to form a holographic reconstruction of a target image on a replay plane. For example, the holographic projector may comprise a display device such as a spatial light modulator. The holographic projector may additionally comprise a light source, such as a laser, arranged to illuminate the spatial light modulator. The holographic projector may additionally comprise one or more optical components such as one or more lenses or mirrors. The holographic reconstruction may be formed by illuminating a diffractive structure displayed on the display device using the light source and using the one or more optical components.

The holographic reconstruction may comprise a picture area. The holographic projector may be arranged such that the picture area is viewable by a user. Furthermore, the holographic reconstruction may comprise features or areas that are used in control processes. For example, the holographic reconstruction may comprise one or more non-picture areas. The non-picture area(s) may comprise one or more control image feature (or control areas) which may be intended to be detected by a detector / sensor and may not be intended to be viewable by a user during use of the holographic projector. For example, in one control process, the brightness of one or more control image features may be measured. This brightness measurement may be used in a feedback process to control the brightness of the holographic reconstruction (in particular, the brightness of the picture area of the holographic projection).

The above described holographic reconstruction comprises a light source arranged to illuminate a display device such as a spatial light modulator. The light source may comprise light of substantially a single (first) wavelength and so the holographic reconstruction associated with that (first) light source may be a single colour corresponding to the first wavelength. In other words, the light source may be a monochromatic light source. A full colour holographic projector may be formed by combining a plurality of single colour / monochromatic holographic projector channels. Each projection channel may comprise a display device arrayed to display holograms and a monochromatic light source. In some embodiments, an approach known as spatially-separated colours, "SSC", is used to provide colour holographic reconstruction. The method of SSC uses three spatially-separated arrays of light-modulating pixels for the three single-colour holograms. In some embodiments, three spatially separate display devices may be provided, one associated with each single-colour hologram. In other embodiments, three spatially separated areas on a single display device (spatial light modulator) may be used to provide the three arrays of light-modulating pixels. In other embodiments, an approach known as frame sequential colour, "FSC", is used to provide colour holographic reconstruction. The method of FSC can use all pixels of a common display device (spatial light modulator) to display the three single-colour holograms in sequence. The single-colour reconstructions are cycled (e.g. red, green, blue, red, green, blue, etc.) fast enough such that a human viewer perceives a polychromatic image from integration of the three single-colour images. In either SSC or FSC, a colour holographic reconstruction is created as the superposition of a three monochromatic holographic reconstructions (the superposition of FSC is separated in time). Notably, each single colour holographic reconstruction is formed by an independent light channel comprising, at least, an independent (monochromatic) light source and, optionally, one or more other components such as optical components and even a unique display device.

As used herein, the "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

One characteristic of holography is the generation of a conjugate image. The conjugate image is a replica of the primary image. The primary image and conjugate image are arranged on different parts of the replay plane or on different parts of a replay field contained within said replay plane. A measure of the (intensity) contrast between a main image feature and its conjugate can provide useful information. In this disclosure, the term "conjugate contrast" refers to the difference or contrast in intensity between a (primary) image feature and the corresponding conjugate or ghost feature. The conjugate or ghost feature is formed as a byproduct from formulating such an image from a diffractive structure i.e. a hologram. Conjugate contrast may be measured from a calibration image as the intensity of a main image feature (the "generator") at a first location with respect to the intensity of its conjugate at a second/complex conjugate location (the "conjugate"). Image or display device optimisation can be based around measurement of the contrast between the primary/bright image feature and its conjugate.

Previously, such a contrast measurement has been completed using a first detector directed at a control image feature on an image plane and a second detector directed at a conjugate area of the image plane.

That is, a control image feature is formulated in the replay field - an area of bright light comprising a small group of image pixels e.g. intended to reflect the maximum intensity of the holographic replay field. The holographic formulation of this control image feature results in a conjugate (a ghost or artifact of the control image feature - in other words a version of the control image feature with a reduced intensity) in a different part of the replay plane or replay field. Simple optical and geometrical analysis can determine where on the replay field the conjugate will be produced depending on the location that the control image feature is produced. As such, the location of the conjugate can be modified by changing the location of the control image feature.

Thus, a control image feature can be arranged at a location on the replay plane at which a first detector is located. Through the above-referenced analysis, a second detector can then be placed on the replay plane at a location in which the conjugate is expected to be formed. Then, the conjugate contrast can be calculated using the intensities measured from both detectors and, optionally, deduction of a background intensity of the replay plane.

However, the inventors have observed that the conjugate does not always form at the expected location. This may be due to factors such as optical distortions imparted on the formation of the conjugate by components (such as the lenses and gratings) of an associated optical system. This may result in the conjugate being translated, rotated and/or scaled from its expected location - and even changed in shape. As such, the conjugate may not appear at the location of the second detector. In a system with fixed (or static) detectors, this would result in the second detector being unable to measure the intensity of the conjugate and the conjugate contrast being indeterminate or incalculable.

According to a first aspect of the disclosure, there is provided a method of measuring a holographic replay field (or holographic reconstruction). The method comprises forming a holographic replay field at a plane comprising a housing, wherein the holographic replay field comprises an image area and a non-image area. By image area, it is meant the area of the replay field in which the hologram formulates the image or picture to be displayed for viewing by a user. Meanwhile, the non-image area is one which is not intended to be viewable to the user (by means such as masking) and as such can be used to "dump" unwanted light, as will be further described below. The method further comprises displaying a first feature at a first position of the holographic replay field. The first feature may be a small area of light comprising a small group of image pixels. The method further comprises measuring an intensity $I_A$ of the first feature using a first light detector, wherein the first light detector is disposed on the housing. By "disposed on" the housing it is meant that the detector is affixed relative to the housing (i.e., so it is immoveable relative to the housing). Intensity can refer to the quantity or amount of photons detected by the light detector. In this case, the voltage measured across the light detector will be proportional to the logarithm of the light intensity. The method further comprises measuring an intensity $I_{A'}$ using a second light detector, wherein the second light detector is disposed on the housing and is aligned with an expected location of the image conjugate of the first feature. That is, the location at which the image conjugate (or simply the conjugate) of the first feature is calculated (for example using basic geometry, as is described below) and the measurement taken at this location. By image conjugate it is meant the ghost or artefact that is present due to the presence of the first feature using a hologram. The image conjugate may appear as a faded or less intense version of the first feature to the user. The method further comprises detecting a low signal from the second light detector, wherein a low signal is a signal having an amplitude or magnitude less than a threshold value. That is, the low signal indicates that the image conjugate is not at the expected second location, and hence the second light detector measures a lower intensity than expected (due to the absence of the light forming the image conjugate of the first feature at the location of the second light detector). In other words, the method checks to see if it is located at the correct location. The image conjugate may not be in the expected location due to distortion of the holographic replay field by optical components downstream from a display device used to generate/produce the holographic replay field (i.e., optical components located on an optical path between said display device and the light detectors). The method further comprises displaying a second feature at a second position of the holographic replay field, wherein the second feature is substantially identical to the first feature and forms (or, in other words, results in) a conjugate at the position of the second light detector. By "substantially identical" the first and second features are substantially the same in at least one of size and intensity. The method further comprises measuring an intensity $I_{B'}$ of the conjugate image of the second feature (not the first feature) using the second light detector.

The inventors have found that the conjugate contrast of a holographic replay field can be measured in this way without needing to measure a first feature (a control image feature) and its corresponding conjugate. Rather, the inventors have gone against the preexisting conventions in the field of holography to surprisingly find that the conjugate contrast can accurately be measured using a first feature and the conjugate of a second feature. This goes against the previously held wisdom that the conjugate contrast could only be accurately or correctly measured between a feature and its corresponding conjugate.

This has allowed the inventors to address the problem of detector location. Specifically, the inventors generate a second feature such that the location of the corresponding conjugate is aligned with the second detector. The position of the second (primary) feature can be controlled to ensure that the second detector can be used to measure the intensity of a conjugate. In this way, the positions of both the (first) feature and the (second) conjugate can be precisely controlled to ensure that they are at the location of the respective first and second detector, to ensure that the conjugate contrast calculation can take place. Furthermore, the location of the measured feature and conjugate can be adjusted during runtime operation (by altering the hologram), to allow the conjugate contrast to be calculated throughout the functioning of the device (that may change the distortion of the size and/or location of the measured feature and/or conjugate over time).

In other words, this method allows for decoupling of the conjugate and generator and enables near total freedom to place measurement or calibration features in the replay field. The resulting system is therefore no longer restricted by measurement locations or sensor placements, and allows use in end of line testing or in vehicle. Rather than having to physically move the light detectors, the light features can be computationally moved on the replay plane to control the location of the measured first feature and second conjugate.

The method may further comprise measuring the conjugate contrast $C_{conj}$ of the holographic replay field. This step may comprise determining the conjugate contrast using the following equation: $C_{conj} = (I_A - I_{bg}) / (I_{B'} - I_{bg})$, where $I_A$ is the intensity of the first feature measured using the first light detector, $I_{B'}$ is the intensity of the conjugate image of the second feature using the second light detector and $I_{bg}$ is the intensity of the background noise of the holographic replay field (the background noise level). In this way, the conjugate contrast takes into account the intensity of the background noise of the replay field. Conventionally, the conjugate contrast ratio is an intensity contrast between the generator (at position A) intensity ($I_A$) and its conjugate feature ($I_{A'}$) using the expression $C_{conj} = (I_A - I_{bg}) / (I_{A'} - I_{bg})$. Alternatively, another set of points at arbitrary position B could be used, that gives the same result $C_{conj} = (I_B - I_{bg}) / (I_{B'} - I_{bg})$. However, the inventors have surprisingly found that the same conclusions about the quality of the holographic reconstructions - and therefore the same image or device optimisation outcome - is achievable when mixing the measurements from different features, e.g. $C_{conj} = (I_A - I_{bg}) / (I_{B'} - I_{bg})$.

The second position may be determined by a) measuring the intensity of the holographic replay field in a first and second direction; b) determining the peak intensities in each of the first and second directions; and c) deriving the second position from the measured peak in the first and second directions. The intensity of step a may be measured in proximity of the expected location where the conjugate should appear. In other words, the second position of the non-image area may be determined by scanning for the conjugate in the x and y directions of the replay field (e.g. in proximity of the expected location or in the quadrant where the conjugate should appear), and determining the peak in x and y; and then deriving the second position from the measured peak in x and y (for example by using simple geometry).

In a perfect system, the expected location of the image conjugate of the first feature is symmetrical about the DC spot with respect to the location of the first feature. As such, the expected location of the image conjugate can be determined via simple geometry from the location of the first feature. Typically, a first detector is directed at a part of the replay plane where a primary image feature will be holography reconstructed and a second detector is directed at a part of the replay plane where the conjugate image feature is expected - determined by a simple x-y reflection about the DC spot. However, in some embodiments of the present disclosure, the second detector is directed at a different part of the replay plane. That is, the second detector is not directed at the expected location of the conjugate of the primary image feature.

At least one of the light detectors may be static - that is, immovable. In other words, the light detectors cannot be moved (e.g. translated) to provide positional optimisation for conjugate contrast measurement. For example, the second detector may be static. Static refers to the light detectors being fixed at a position relative to the plane of the replay field at least in the dimensions of said plane. The ability to adjust the location of the measure conjugate allows the light detectors to be static, as discussed above.

The first light detector may be aligned with the first feature. That is, the first light director may directly measure the intensity of the first feature.

Some embodiments comprise a housing where a holographic replay field (i.e. holographic image) is formed. For example, the housing may be arranged to support optical components of the system (such as a screen or diffuser e.g. translating or rotating diffuser) and/or diagnostic components (such as photodetectors) for providing feedback to the system. The housing may support multiple diagnostic components that monitor different parts of the holographic replay field. One example of a diagnostic component for providing feedback is provided in British patent number GB2552850.

The housing may comprise a transmission area substantially aligned with the image area and a non-transmission area substantially aligned with the non-image area. In other words, the housing is a permanent feature of the display or projection system and is not, for example, a dedicated alignment module or device used in e.g. a one-off process for optical alignment of the optical system. That is, in other words, the housing may be fixed or immovable relative to the rest of the display or projection system. Previously, this dedicated device would have to be added to the system and physically moved to ensure its detectors were located at the correct location to conduct the required intensity measurements. However, with the present invention this is no longer necessary, as the light detectors can be located anywhere in relation to the replay field (both in the image and non-image areas), as will be described in further detail throughout this application.

In other embodiments, the housing is removeable from the display or projection device to act as a dedicated alignment module or device used in e.g. a one-off process for optical alignment of the optical system. However, unlike previous examples of such a module/device, it does not have to be physically moved to ensure its detectors are located at the correct location to conduct the required intensity measurements. That is, because of the decoupling of the conjugate and generator (described herein) that enables near total freedom to place measurement or calibration features in the replay field, the dedicated alignment module or device the housing acts as can be "one size fits all". In other words, the same dedicated alignment module or device can be used for each alignment process, with the displaying of the features changed instead. This allows for a simpler and cheaper alignment process in, for example, a factory setting.

The intensity measured by the first and/or second light detector may additionally be used to monitor the intensity of the colour balance of the holographic replay field. The intensity measured by the first and/or second light detector may additionally be used to calibrate the reference voltage, "VCOM", of a liquid crystal device used to form the holographic replay field. The intensity measured by the first and/or second light detector may additionally be used to optimise the so-called "gamma" of the liquid crystal device used to form the holographic replay field. In other words, the first and second detectors can have uses other than simply measuring the conjugate contrast of the replay field. This reduces the number of components required in the housing, as the method can use detectors that are already present in the system for a different purpose.

The method may be performed during end-of-line calibration of a device forming the holographic replay field. The method may be performed during run-time of a device forming the holographic replay field. As such, the method may be used for the testing and set-up of such a device, or during the use of such a device. In other words, this same measurement approach is also able to be used to tune the VCOM in the cell at end of line and in the vehicle at run-time. The device may be a holographic projector, optionally the holographic projector may be for a head-up display.

According to a second aspect of the disclosure, there is provided a method of determining an intensity ratio of a holographic replay field. The method comprises forming a holographic replay field at a plane comprising a housing, wherein the holographic replay field comprises an image area and a non-image area. The method further comprises displaying a first feature at a first position of the holographic replay field. The method further comprises measuring an intensity $I_A$ of the first feature using a first light detector, wherein the first light detector is disposed on the housing. The method further comprises displaying a second feature at a second position of the holographic replay field, wherein the second feature is substantially identical to the first feature and forms (or results in) a conjugate at the position of the second light detector. The method further comprises measuring an intensity $I_{B'}$ of the conjugate image of the second feature using the second light detector. The method further comprises calculating a ratio of the intensities $I_A$, $I_{B'}$ of the first feature and the conjugate image of the second feature.

That is, this second aspect does not necessarily check the intensity of the first feature before displaying the second feature, as described above in relation to the first aspect (however, this feature may still be present, as described below). As such, the second aspect may be used in scenarios in which the distortion of an conjugate image formed by the first feature is presupposed, or in a scenario in which the light detecting/measurement is done immediately after the display device (i.e., before, on an optical path through the display system producing the holographic replay field, the optical components described above). That is, the light detecting may be done before the optical components that may distort the location of the image conjugates away from their expected location.

The method may further comprise, between the steps of measuring the intensity IA of the first feature and displaying the second feature, measuring an intensity IA' using a second light detector. The second light detector may be aligned with an expected location of the image conjugate of the first feature. Subsequently, the method may further comprise detecting a low signal from the second light detector. A low signal may be a signal having an amplitude or magnitude less than a threshold value. That is, the method of the second aspect may further comprise these steps as described above in relation to the first aspect.

The ratio of the intensities $I_A$, $I_{B'}$ of the first feature and the conjugate image of the second feature may be the conjugate contrast $C_{conj}$ of the holographic replay field. That is, the ratio of the intensities $I_A$, $I_{B'}$ of the first feature and the conjugate image of the second feature may be the conjugate contrast $C_{conj}$ of the holographic replay field measured as discussed above in relation to the first aspect. As such, the step of calculating the ratio of the intensities $I_A$, $I_{B'}$ of the first feature and the conjugate image of the second feature may be found by: $C_{conj} = (I_A - I_{bg}) / (I_{B'} - I_{bg})$, where $I_{bg}$ is the intensity of the background noise of the holographic replay field.

The corresponding first or second position may be in the non-image area. Both the first and second positions may be in the non-image area. It may be said that any position not in the non-image area is in the image area. The inventors have found that there are cases where it is preferable for the first and second positions to be in the non-image area. These include performing the method whilst the holographic replay field is in use. Whilst the holographic replay field is in use (for example, when as part of a head-up display for a vehicle), displaying first and second features at the first and second positions may distract the user, and so it is preferable to have the first and second positions in the non-image area (i.e., where the user cannot see them). However, there are also cases where it is preferable for the first and second positions to be in the image area. These include performing the method before use (i.e., during manufacture or calibration of a device producing the holographic replay field). This may be because the method is easier to perform with external detectors (i.e., detectors disposed on a housing that is removable from the display system) whilst said device is still, for example, in the factory or other manufacturing facility. That is, as described above, the method allows for decoupling of the conjugate and generator and enables near total freedom to place measurement or calibration features in the replay field. As such, the locations of the light detectors and features can be freely changed to suit the scenario the method in which the method is being performed (for example, in use or during manufacturing).

More features beyond first and second features may be used. That is, the method may further comprise displaying a plurality of features at a plurality of positions of the holographic replay field and then measuring an intensity of the conjugate image of each feature using a plurality of light detectors. The plurality of positions (and therefore the plurality of features) may be arranged in a (regular) array on the holographic replay field.

Features and advantages described in relation to the method of the first aspect may be applicable to the method of the second aspect, and vice versa.

According to a third aspect of the disclosure, there is provided a method of measuring a holographic replay field (or holographic reconstruction). The method comprises forming a holographic replay field comprising an image area and a non-image area. The method further comprises displaying a first feature at a first position of the holographic replay field. The method further comprises measuring an intensity $I_A$ of the first feature using a first light detector. The method further comprises measuring an intensity $I_{A'}$ using a second light detector, wherein the second light detector is aligned with an expected location of the image conjugate of the first feature. The method further comprises detecting a low signal from the second light detector, wherein a low signal is a signal having an amplitude or magnitude less than a threshold value. The method further comprises displaying a second feature at a second position of the holographic replay field, wherein the second feature is substantially identical to the first feature and forms a conjugate at the position of the second light detector. The method further comprises measuring an intensity $I_{B'}$ of the conjugate image of the second feature using the second light detector.

Features and advantages described in relation to the method of the first aspect or the second aspect may be applicable to the method of the third aspect, and vice versa.

According to a fourth aspect of the disclosure there is provided a holographic projection system. The system comprises a light source arranged to output light and a housing. The system further comprises a display device arranged to display a diffractive pattern comprising a hologram of a target image. The display device is further arranged to receive light from the light source and output spatially modulated light in accordance with the diffractive pattern to form a holographic replay field of the target image at a replay plane. The housing is located at the replay plane. The holographic replay field comprises an image area and a non-image area. The display device is further arranged to display a first feature at a first position of the holographic replay field. The system further comprises a first light detector disposed on the housing. The system further comprises a second light detector disposed on the housing. The system further comprises a processor. The processor is arranged to measure an intensity $I_A$ of the first feature using the first light detector. The processor is further arranged to display a second feature at a second position of the holographic replay field, wherein the second feature is substantially identical to the first feature and forms a conjugate at the position of the second light detector. The processor is further arranged to measure an intensity $I_{B'}$ of the conjugate image of the second feature using the second light detector. Finally, the processor is arranged to calculate a ratio of the intensities $I_A$, $I_{B'}$ of the first feature and the conjugate image of the second feature.

The processor may be further arranged, between the steps of measuring the intensity $I_A$ of the first feature and displaying the second feature, to measure an intensity $I_{A'}$ using the second light detector, wherein the second light detector may be aligned with an expected location of the image conjugate of the first feature. The processor may be further arranged to subsequently detect a low signal from the second light detector. A low signal may be a signal having an amplitude or magnitude less than a threshold value.

The first or second position may be in the non-image area. Both the first and second positions may be in the non-image area.

According to a fifth aspect of the disclosure there is provided a picture generating unit comprising the above-described holographic projection system.

According to a sixth aspect of the disclosure there is provided a head-up display comprising the above-described picture generating unit.

Features and advantages described in relation to the methods of the first, second or third aspects may be applicable to the projection system of the fourth aspect, the fifth aspect of the picture generating unit and the sixth aspect of the head-up display, and vice versa. That is, the projection system of the fourth aspect may have a processor arranged to carry out the method according to the first, second or third aspects.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. It may therefore be said that a plurality of replicas of the hologram are formed. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram.

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values.

Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude *and* phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to $2\pi$) which represents the amount of phase retardation provided by that pixel. For example, a pixel of the spatial light modulator described as having a phase value of $\pi/2$ will retard the phase of received light by $\pi/2$ radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

## BRIEF DESCRIPTION OF THE DRAWINGS

Specific embodiments are described by way of example only with reference to the following figures:

Figure 1 is a schematic showing a reflective SLM producing a holographic reconstruction on a screen;
Figure 2A illustrates a first iteration of an example Gerchberg-Saxton type algorithm;
Figure 2B illustrates the second and subsequent iterations of the example Gerchberg-Saxton type algorithm;
Figure 2C illustrates alternative second and subsequent iterations of the example Gerchberg-Saxton type algorithm;
Figure 3 is a schematic of a reflective LCOS SLM;
Figure 4 is a schematic of feature of a holographic projection system used to form a holographic reconstruction on a replay plane, the holographic reconstruction comprising a picture area and a non-picture area;
Figure 5 is a schematic view of a measurement method in accordance with the prior art;
Figure 6 is a schematic view of a measurement method in accordance with a first embodiment of the present disclosure;
Figure 7 is a flow diagram of a method in accordance with the present disclosure; and
Figure 8 is a schematic view of a measurement method in accordance with a second embodiment of the present disclosure.

The same reference numbers will be used throughout the drawings to refer to the same or like parts.

## DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

Optical configuration of Holographic Picture Generating Unit

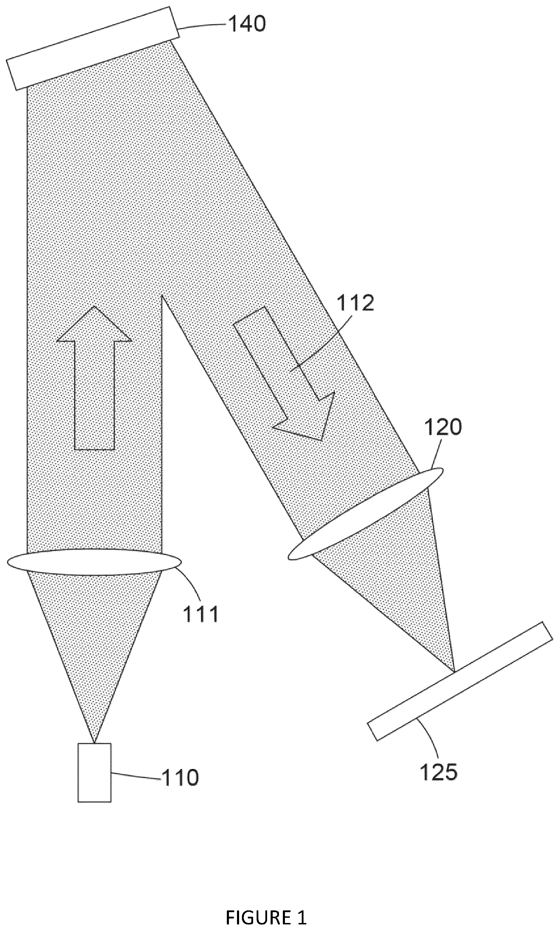

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform.

Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms.

A Fourier transform hologram may be calculated using an algorithm such as the Gerchberg-Saxton algorithm. Furthermore, the Gerchberg-Saxton algorithm may be used to calculate a hologram in the Fourier domain (i.e. a Fourier transform hologram) from amplitude-only information in the spatial domain (such as a photograph). The phase information related to the object is effectively "retrieved" from the amplitude-only information in the spatial domain. In some embodiments, a computer-generated hologram is calculated from amplitude-only information using the Gerchberg-Saxton algorithm or a variation thereof.

The Gerchberg Saxton algorithm considers the situation when intensity cross-sections of a light beam, $I_A(x, y)$ and $I_B(x, y)$, in the planes A and B respectively, are known and $I_A(x, y)$ and $I_B(x, y)$ are related by a single Fourier transform. With the given intensity cross-sections, an approximation to the phase distribution in the planes A and B, $\Psi_A(c, y)$ and $\Psi_B(x, y)$ respectively, is found. The Gerchberg-Saxton algorithm finds solutions to this problem by following an iterative process. More specifically, the Gerchberg-Saxton algorithm iteratively applies spatial and spectral constraints while repeatedly transferring a data set (amplitude and phase), representative of $I_A(x, y)$ and $I_B(x, y)$, between the spatial domain and the Fourier (spectral or frequency) domain. The corresponding computer-generated hologram in the spectral domain is obtained through at least one iteration of the algorithm. The algorithm is convergent and arranged to produce a hologram representing an input image. The hologram may be an amplitude-only hologram, a phase-only hologram or a fully complex hologram.

In some embodiments, a phase-only hologram is calculated using an algorithm based on the Gerchberg-Saxton algorithm such as described in British patent 2,498,170 or 2,501,112 which are hereby incorporated in their entirety by reference. However, embodiments disclosed herein describe calculating a phase-only hologram by way of example only. In these embodiments, the Gerchberg-Saxton algorithm retrieves the phase information $\Psi[u, v]$ of the Fourier transform of the data set which gives rise to a known amplitude information $T[x, y]$, wherein the amplitude information $T[x, y]$ is representative of a target image (e.g. a photograph). Since the magnitude and phase are intrinsically combined in the Fourier transform, the transformed magnitude and phase contain useful information about the accuracy of the calculated data set. Thus, the algorithm may be used iteratively with feedback on both the amplitude and the phase information. However, in these embodiments, only the phase information $\Psi[u, v]$ is used as the hologram to form a holographic representative of the target image at an image plane. The hologram is a data set (e.g. 2D array) of phase values.

In other embodiments, an algorithm based on the Gerchberg-Saxton algorithm is used to calculate a fully-complex hologram. A fully-complex hologram is a hologram having a magnitude component and a phase component. The hologram is a data set (e.g. 2D array) comprising an array of complex data values wherein each complex data value comprises a magnitude component and a phase component.

In some embodiments, the algorithm processes complex data and the Fourier transforms are complex Fourier transforms. Complex data may be considered as comprising (i) a *real* component and an *imaginary* component or (ii) a *magnitude* component and a *phase* component. In some embodiments, the two components of the complex data are processed differently at various stages of the algorithm.

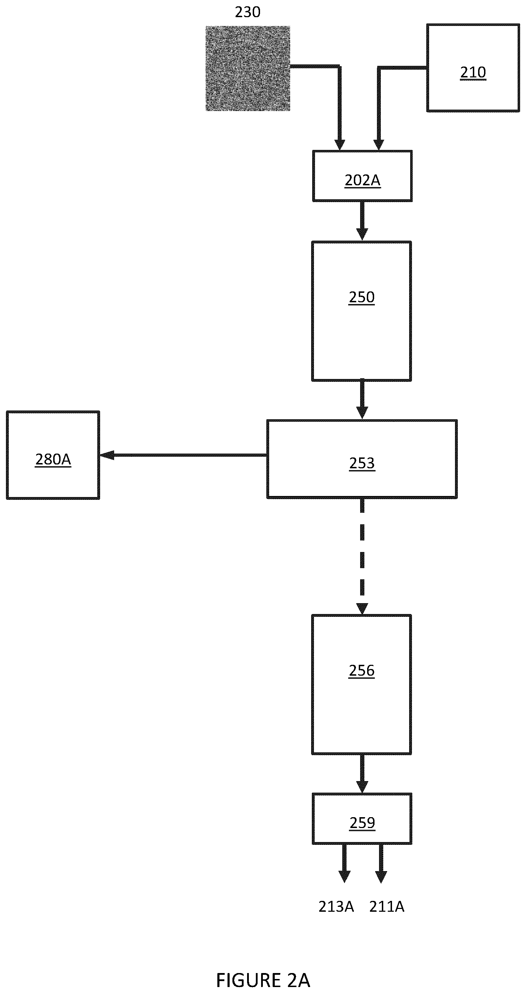

Figure 2A illustrates the first iteration of an algorithm in accordance with some embodiments for calculating a phase-only hologram. The input to the algorithm is an input image 210 comprising a 2D array of pixels or data values, wherein each pixel or data value is a magnitude, or amplitude, value. That is, each pixel or data value of the input image 210 does not have a phase component. The input image 210 may therefore be considered a magnitude-only or amplitude-only or intensity-only distribution. An example of such an input image 210 is a photograph or one frame of video comprising a temporal sequence of frames. The first iteration of the algorithm starts with a data forming step 202A comprising assigning a random phase value to each pixel of the input image, using a random phase distribution (or random phase seed) 230, to form a starting complex data set wherein each data element of the set comprising magnitude and phase. It may be said that the starting complex data set is representative of the input image in the spatial domain.

First processing block 250 receives the starting complex data set and performs a complex Fourier transform to form a Fourier transformed complex data set. Second processing block 253 receives the Fourier transformed complex data set and outputs a hologram 280A. In some embodiments, the hologram 280A is a phase-only hologram. In these embodiments, second processing block 253 quantises each phase value and sets each amplitude value to unity in order to form hologram 280A. Each phase value is quantised in accordance with the phase-levels which may be represented on the pixels of the spatial light modulator which will be used to "display" the phase-only hologram. For example, if each pixel of the spatial light modulator provides 256 different phase levels, each phase value of the hologram is quantised into one phase level of the 256 possible phase levels. Hologram 280A is a phase-only Fourier hologram which is representative of an input image. In other embodiments, the hologram 280A is a fully complex hologram comprising an array of complex data values (each including an amplitude component and a phase component) derived from the received Fourier transformed complex data set. In some embodiments, second processing block 253 constrains each complex data value to one of a plurality of allowable complex modulation levels to form hologram 280A. The step of constraining may include setting each complex data value to the nearest allowable complex modulation level in the complex plane.

It may be said that hologram 280A is representative of the input image in the spectral or Fourier or frequency domain. In some embodiments, the algorithm stops at this point.

However, in other embodiments, the algorithm continues as represented by the dotted arrow in Figure 2A. In other words, the steps which follow the dotted arrow in Figure 2A are optional (i.e. not essential to all embodiments).

Third processing block 256 receives the modified complex data set from the second processing block 253 and performs an inverse Fourier transform to form an inverse Fourier transformed complex data set. It may be said that the inverse Fourier transformed complex data set is representative of the input image in the spatial domain.

Fourth processing block 259 receives the inverse Fourier transformed complex data set and extracts the distribution of magnitude values 211A and the distribution of phase values 213A. Optionally, the fourth processing block 259 assesses the distribution of magnitude values 211A. Specifically, the fourth processing block 259 may compare the distribution of magnitude values 211A of the inverse Fourier transformed complex data set with the input image 510 which is itself, of course, a distribution of magnitude values. If the difference between the distribution of magnitude values 211A and the input image 210 is sufficiently small, the fourth processing block 259 may determine that the hologram 280A is acceptable. That is, if the difference between the distribution of magnitude values 211A and the input image 210 is sufficiently small, the fourth processing block 259 may determine that the hologram 280A is a sufficiently-accurate representative of the input image 210. In some embodiments, the distribution of phase values 213A of the inverse Fourier transformed complex data set is ignored for the purpose of the comparison. It will be appreciated that any number of different methods for comparing the distribution of magnitude values 211A and the input image 210 may be employed and the present disclosure is not limited to any particular method. In some embodiments, a mean square difference is calculated and if the mean square difference is less than a threshold value, the hologram 280A is deemed acceptable. If the fourth processing block 259 determines that the hologram 280A is not acceptable, a further iteration of the algorithm may be performed. However, this comparison step is not essential and in other embodiments, the number of iterations of the algorithm performed is predetermined or preset or user-defined.

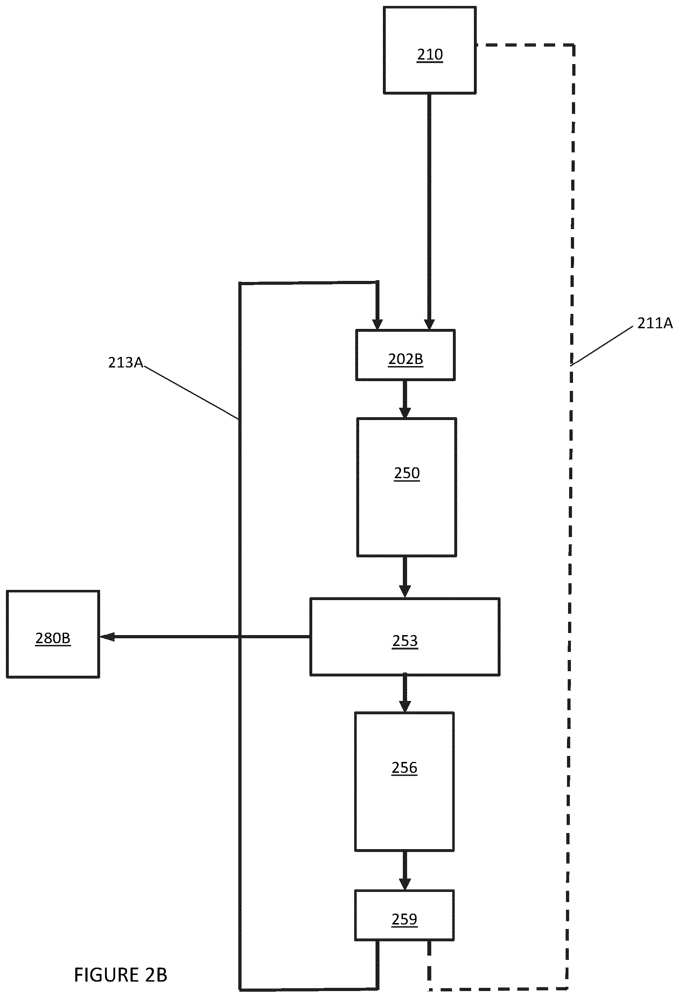

Figure 2B represents a second iteration of the algorithm and any further iterations of the algorithm. The distribution of phase values 213A of the preceding iteration is fed-back through the processing blocks of the algorithm. The distribution of magnitude values 211A is rejected in favour of the distribution of magnitude values of the input image 210. In the first iteration, the data forming step 202A formed the first complex data set by combining distribution of magnitude values of the input image 210 with a random phase distribution 230. However, in the second and subsequent iterations, the data forming step 202B comprises forming a complex data set by combining (i) the distribution of phase values 213A from the previous iteration of the algorithm with (ii) the distribution of magnitude values of the input image 210.

The complex data set formed by the data forming step 202B of Figure 2B is then processed in the same way described with reference to Figure 2A to form second iteration hologram 280B. The explanation of the process is not therefore repeated here. The algorithm may stop when the second iteration hologram 280B has been calculated. However, any number of further iterations of the algorithm may be performed. It will be understood that the third processing block 256 is only required if the fourth processing block 259 is required or a further iteration is required. The output hologram 280B generally gets better with each iteration. However, in practice, a point is usually reached at which no measurable improvement is observed or the positive benefit of performing a further iteration is out-weighted by the negative effect of additional processing time. Hence, the algorithm is described as iterative and convergent.

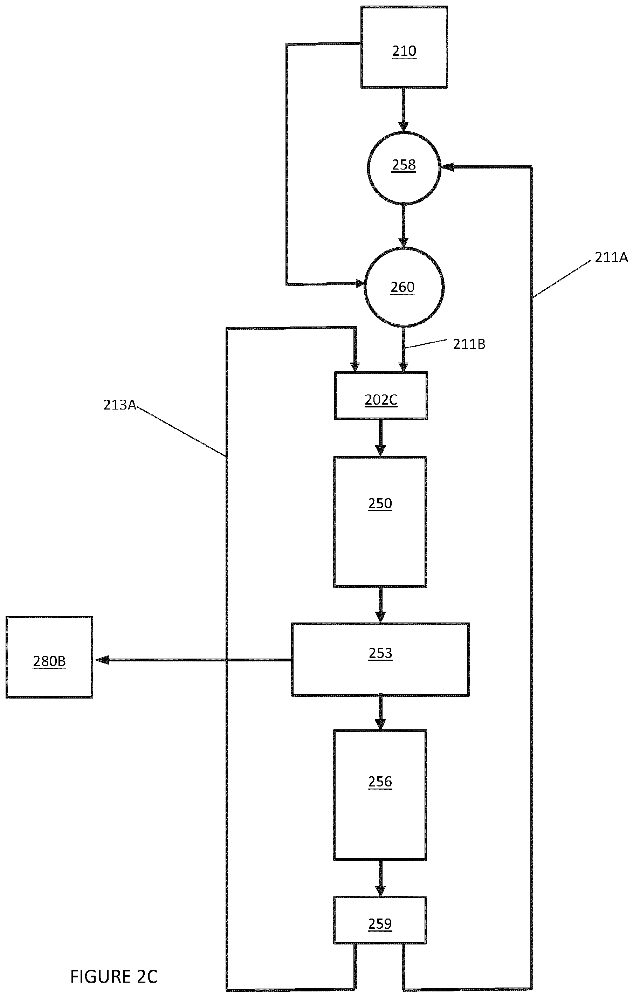

Figure 2C represents an alternative embodiment of the second and subsequent iterations. The distribution of phase values 213A of the preceding iteration is fed-back through the processing blocks of the algorithm. The distribution of magnitude values 211A is rejected in favour of an alternative distribution of magnitude values. In this alternative embodiment, the alternative distribution of magnitude values is derived from the distribution of magnitude values 211 of the previous iteration. Specifically, processing block 258 subtracts the distribution of magnitude values of the input image 210 from the distribution of magnitude values 211 of the previous iteration, scales that difference by a gain factor $\alpha$ and subtracts the scaled difference from the input image 210. This is expressed mathematically by the following equations, wherein the subscript text and numbers indicate the iteration number:

$$R_{n+1}[x, y] = F'\{\exp(i\,\psi_n[u, v])\}$$

$$\psi_n[u, v] = \angle F\{\eta \cdot \exp(i\angle R_n[x, y])\}$$

$$\eta = T[x, y] - \alpha(|R_n[x, y]| - T[x, y])$$

where:

F' is the inverse Fourier transform;
F is the forward Fourier transform;
R[x, y] is the complex data set output by the third processing block 256;
T[x, y] is the input or target image;
$\angle$ is the phase component;
$\Psi$ is the phase-only hologram 280B;
$\eta$ is the new distribution of magnitude values 211B; and
$\alpha$ is the gain factor.

The gain factor $\alpha$ may be fixed or variable. In some embodiments, the gain factor $\alpha$ is determined based on the size and rate of the incoming target image data. In some embodiments, the gain factor $\alpha$ is dependent on the iteration number. In some embodiments, the gain factor $\alpha$ is solely function of the iteration number.

The embodiment of Figure 2C is the same as that of Figure 2A and Figure 2B in all other respects. It may be said that the phase-only hologram $\Psi$(u, v) comprises a phase distribution in the frequency or Fourier domain.

In some embodiments, the Fourier transform is performed using the spatial light modulator. Specifically, the hologram data is combined with second data providing optical power. That is, the data written to the spatial light modulation comprises hologram data representing the object and lens data representative of a lens. When displayed on a spatial light modulator and illuminated with light, the lens data emulates a physical lens - that is, it brings light to a focus in the same way as the corresponding physical optic. The lens data therefore provides optical, or focusing, power. In these embodiments, the physical Fourier transform lens 120 of Figure 1 may be omitted. It is known how to calculate data representative of a lens. The data representative of a lens may be referred to as a software lens. For example, a phase-only lens may be formed by calculating the phase delay caused by each point of the lens owing to its refractive index and spatially-variant optical path length. For example, the optical path length at the centre of a convex lens is greater than the optical path length at the edges of the lens. An amplitude-only lens may be formed by a Fresnel zone plate. It is also known in the art of computer-generated holography how to combine data representative of a lens with a hologram so that a Fourier transform of the hologram can be performed without the need for a physical Fourier lens. In some embodiments, lensing data is combined with the hologram by simple addition such as simple vector addition. In some embodiments, a physical lens is used in conjunction with a software lens to perform the Fourier transform. Alternatively, in other embodiments, the Fourier transform lens is omitted altogether such that the holographic reconstruction takes place in the far-field. In further embodiments, the hologram may be combined in the same way with grating data - that is, data arranged to perform the function of a grating such as image steering. Again, it is known in the field how to calculate such data. For example, a phase-only grating may be formed by modelling the phase delay caused by each point on the surface of a blazed grating. An amplitude-only grating may be simply superimposed with an amplitude-only hologram to provide angular steering of the holographic reconstruction. The second data providing lensing and/or steering may be referred to as a light processing function or light processing pattern to distinguish from the hologram data which may be referred to as an image forming function or image forming pattern.

In some embodiments, the Fourier transform is performed jointly by a physical Fourier transform lens and a software lens. That is, some optical power which contributes to the Fourier transform is provided by a software lens and the rest of the optical power which contributes to the Fourier transform is provided by a physical optic or optics.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

Embodiments relate to Fourier holography and Gerchberg-Saxton type algorithms by way of example only. The present disclosure is equally applicable to Fresnel holography and Fresnel holograms which may be calculated by a similar method. The present disclosure is also applicable to holograms calculated by other techniques such as those based on point cloud methods.

Light modulation

A spatial light modulator may be used to display the diffractive pattern including the computer-generated hologram. If the hologram is a phase-only hologram, a spatial light modulator which modulates phase is required. If the hologram is a fully-complex hologram, a spatial light modulator which modulates phase and amplitude may be used or a first spatial light modulator which modulates phase and a second spatial light modulator which modulates amplitude may be used.

In some embodiments, the light-modulating elements (i.e. the pixels) of the spatial light modulator are cells containing liquid crystal. That is, in some embodiments, the spatial light modulator is a liquid crystal device in which the optically-active component is the liquid crystal. Each liquid crystal cell is configured to selectively-provide a plurality of light modulation levels. That is, each liquid crystal cell is configured at any one time to operate at one light modulation level selected from a plurality of possible light modulation levels. Each liquid crystal cell is dynamically-reconfigurable to a different light modulation level from the plurality of light modulation levels. In some embodiments, the spatial light modulator is a reflective liquid crystal on silicon (LCOS) spatial light modulator but the present disclosure is not restricted to this type of spatial light modulator.

A LCOS device provides a dense array of light modulating elements, or pixels, within a small aperture (e.g. a few centimetres in width). The pixels are typically approximately 10 microns or less which results in a diffraction angle of a few degrees meaning that the optical system can be compact. It is easier to adequately illuminate the small aperture of a LCOS SLM than it is the larger aperture of other liquid crystal devices. An LCOS device is typically reflective which means that the circuitry which drives the pixels of a LCOS SLM can be buried under the reflective surface. The results in a higher aperture ratio. In other words, the pixels are closely packed meaning there is very little dead space between the pixels. This is advantageous because it reduces the optical noise in the replay field. A LCOS SLM uses a silicon backplane which has the advantage that the pixels are optically flat. This is particularly important for a phase modulating device.

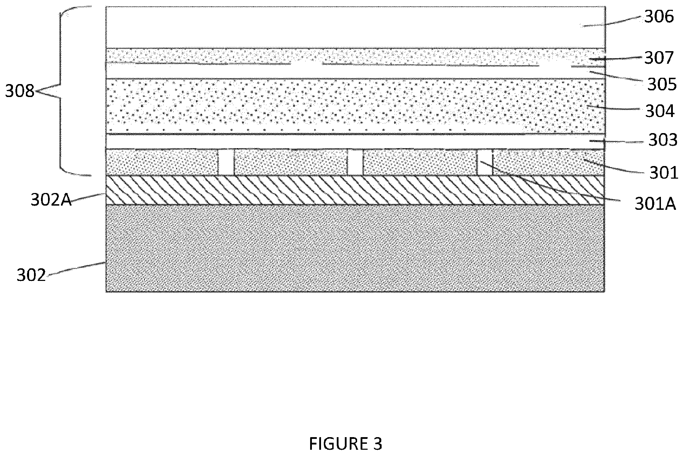

A suitable LCOS SLM is described below, by way of example only, with reference to Figure 3. An LCOS device is formed using a single crystal silicon substrate 302. It has a 2D array of square planar aluminium electrodes 301, spaced apart by a gap 301a, arranged on the upper surface of the substrate. Each of the electrodes 301 can be addressed via circuitry 302a buried in the substrate 302. Each of the electrodes forms a respective planar mirror. An alignment layer 303 is disposed on the array of electrodes, and a liquid crystal layer 304 is disposed on the alignment layer 303. A second alignment layer 305 is disposed on the planar transparent layer 306, e.g. of glass. A single transparent electrode 307 e.g. of ITO is disposed between the transparent layer 306 and the second alignment layer 305.

Each of the square electrodes 301 defines, together with the overlying region of the transparent electrode 307 and the intervening liquid crystal material, a controllable phase-modulating element 308, often referred to as a pixel. The effective pixel area, or fill factor, is the percentage of the total pixel which is optically active, taking into account the space between pixels 301a. By control of the voltage applied to each electrode 301 with respect to the transparent electrode 307, the properties of the liquid crystal material of the respective phase modulating element may be varied, thereby to provide a variable delay to light incident thereon. The effect is to provide phase-only modulation to the wavefront, i.e. no amplitude effect occurs.

The described LCOS SLM outputs spatially modulated light in reflection. Reflective LCOS SLMs have the advantage that the signal lines, gate lines and transistors are below the mirrored surface, which results in high fill factors (typically greater than 90%) and high resolutions. Another advantage of using a reflective LCOS spatial light modulator is that the liquid crystal layer can be half the thickness than would be necessary if a transmissive device were used. This greatly improves the switching speed of the liquid crystal (a key advantage for the projection of moving video images). However, the teachings of the present disclosure may equally be implemented using a transmissive LCOS SLM.

As described above, the principles of the present disclosure are applicable to non-holographic picture generating units as well as holographic picture generating units as described above.

Compact Head-up Display

The picture generating unit described in relation to Figure 1 is typically provided as part of a head-up display system (HUD-system). The HUD system further comprises an optical relay system arranged to relay light of a picture from a display area of a picture generating unit to an eye-box such that a virtual image of the picture is visible therefrom. As described herein, the eye-box comprises an area, optionally a volume, from which the virtual image can be fully perceived by a viewer. As the skilled person will appreciate, the virtual image becomes increasingly less completely visible from viewing positions further away from the eye-box.

Ray tracing techniques may be used to measure parameters, such as distortion and horizontal/vertical disparity, in order to objectively identify viewing positions where the virtual image is clear. Based on such measurements, the inventors have recognised that the optical relay system may be configured in order to define the eye-box area to satisfy design requirements, such as packing requirements.

Holographic Reconstruction or Replay Field

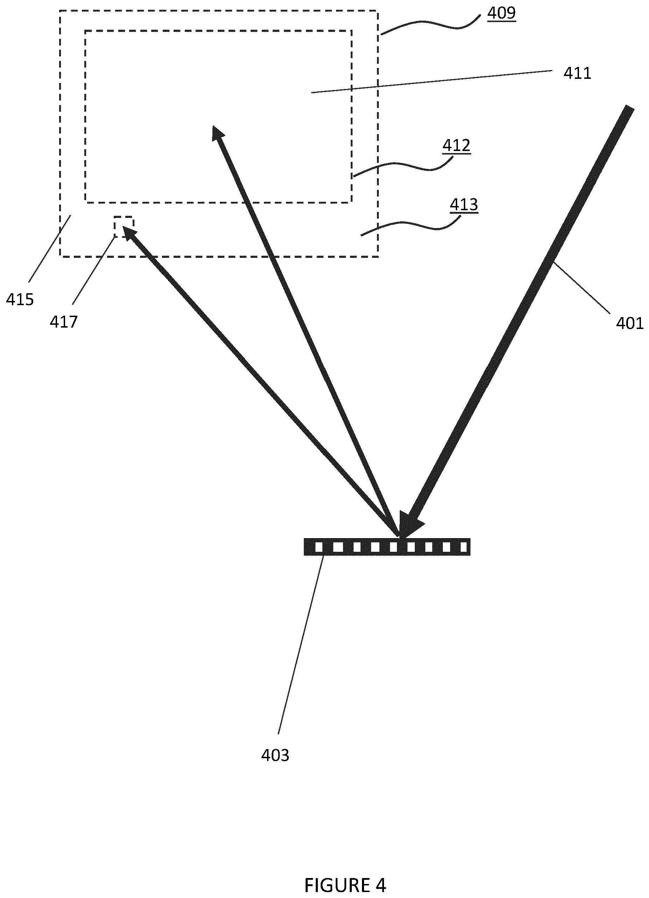

A holographic projection system or holographic projector is described with reference to Figure 4. A light source is arranged to output light 401 having a first wavelength. The light 401 in this embodiment is a beam of collimated light from a laser light source. The light 401 is incident upon a spatial light modulator (or SLM) 403, which is arranged to receive the laser light 401 from the laser light source. SLM 403 is arranged to display a diffractive pattern. Light 401 that is received by the spatial light modulator 403 (and so illuminates the SLM) is spatially modulated in accordance with the diffractive pattern displayed on SLM 403 to form a holographic reconstruction / replay field 409. The diffractive pattern comprises a hologram of a picture. The holographic reconstruction is a holographic reconstruction of the picture.

The replay field 409 is a region of space into which light can be projected. The replay field 409 is coplanar with / defines a replay plane. The holographic reconstruction / replay field 409 comprises a picture area 411 (or image region) in which information for a user to view can be projected. For example, when the projection system is deployed in an automobile, information for display to a driver (such as the speedometer) can be provided in the picture area 411. The area outside of the picture area 411 may be referred to generally as the non-picture area 413. As will be described in more detail below, light of the non-picture area 413 can be blocked by a physical mask. Thus, only the picture area 411 may be visible to a user during normal use of the system. The picture area 411 and non-picture area 413 are separated by boundary 412. The boundary 412 defines the shape of the picture area 411. The picture area 411 is substantially rectangular such that the boundary comprises first and second horizontal edges and first and second vertical edges.

In this embodiment, the non-picture area 413 comprises a noise area 415 and an optional a control image feature 417 (the function of which will be described below). The noise area 415 comprises noise. As above, the diffractive pattern comprises a hologram of a picture. In this embodiment, the hologram is a computer-generated hologram (such as one that has been calculated in accordance with the one of methods described above). As described above, a computer-generated hologram typically comprises the use of one or more algorithms to converge on a hologram (e.g. a phase-only hologram) of an image. Generally, it is much less computationally expensive to converge on a hologram of a picture that comprises noise when it is reconstructed. However, the hologram can be calculated in a way such that the noise is conveniently located or "dumped" in the noise area 415 which is outside (e.g. bordering) a picture area 413. As the noise area 415 (as part of the non-picture area 413) is usually not visible during normal use of the system, the noise that is "dumped" in the noise area 415 is not visible to a user of the system. Thus, a more computationally inexpensive hologram (in which some noise is formed in the holographic reconstruction) can be calculated. As will be discussed further below, the control image feature 417 can be used in a measurement process of the system. In this example, the control image feature 417 is a relatively small patch of light (e.g. a relatively small number of image pixels). The system comprises a detector (not shown in the Figures) arranged to detect a property of the control image feature 417. In this embodiment, the detected property of the control image feature 417 is brightness. The system may be arranged to alter the hologram calculation / self-calibrate based on the detected property, for example to improve the contrast of the hologram, as will be further discussed below. Figure 4 shows a single control image feature 417. It should be clear that the holographic reconstruction 409 may comprise any number of further control image features. Furthermore, it should be clear that the (one or more) control image features may be used for a variety of different control processes. Other examples of control processes may include measuring the wavelength of the light 401 or maintaining an acceptable / good colour balance.

Conjugate Contrast Measurement

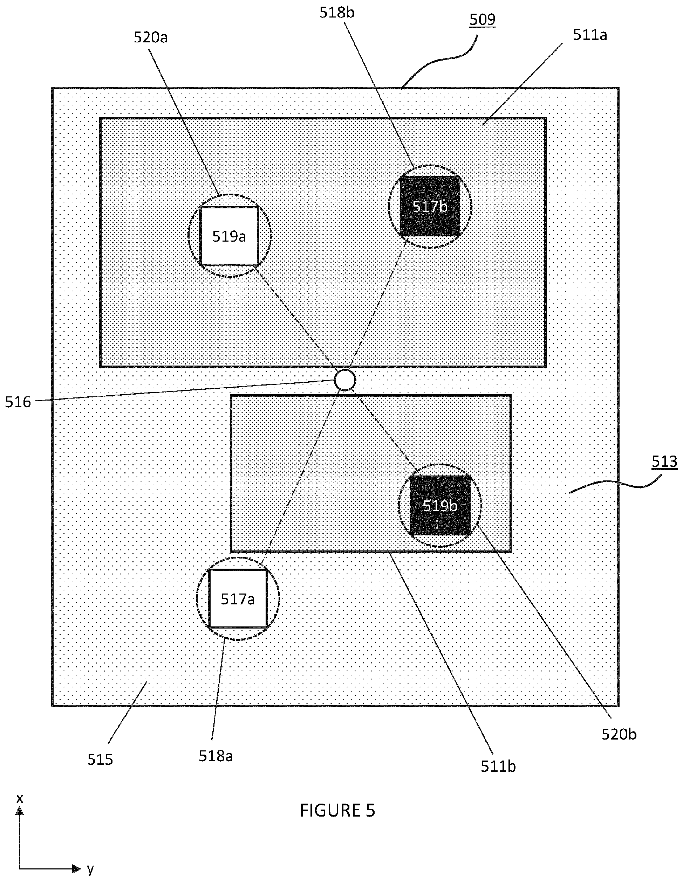

A schematic holographic reconstruction (or replay field) according to the prior art is shown in Figure 5. In this example, a replay field 509 comprises two picture areas 511a, 511b (or image regions) as in Figure 4. The area outside of the picture areas 511a, 511b may be referred to generally as the non-picture area 513. Also as in Figure 4, the non-picture area 513 comprises a noise area 515 that comprises noise. As in Figure 4 (as described above), the hologram can be calculated in a way such that the noise is conveniently located or "dumped" in the noise area 515 which is outside (e.g. bordering) the picture areas 511a, 511b. As the noise area 515 (as part of the non-picture area 513) is usually not visible during normal use of the system, the noise that is "dumped" in the noise area 515 is not visible to a user of the system. At the centre of the replay field 509 is the DC spot 516. As with Figure 4, the replay field 509 in Figure 5 is schematic and so the shape and number of the picture areas 511a, 511b and the non-picture area 513 may be different. In other words, the two picture areas 511a, 511b shown in Figure 5 is a design choice.

A first control image feature 517a (a first feature) is allocated to a part of the replay field 509 (in other words, formed or arranged on the replay field 509) as in Figure 4 within the non-picture area 513. The first control image feature 517a results in (in other words, forms) a first image conjugate 517b (or simply a first conjugate) symmetrically about the DC spot 516. As such, if the first control image feature 517a is arranged in a different location, so will the first image conjugate 517b.

A first light detector is located in a first detection area 518a to be able to measure the "generator" intensity $I_A$ of the first control image feature 517a. According to the prior art, a second light detector is located in a second light detection area 518b to be able to measure the "conjugate" intensity $I_{A'}$ of the first image conjugate 517b.

The generator intensity $I_A$ of the first control image feature 517a and the conjugate intensity $I_{A'}$ of the first image conjugate 517b are then used to calculate the conjugate contrast $C_{conj}$ of the replay field 509. This calculation is found using the formula: $C_{conj} = (I_A - I_{bg}) / (I_{A'} - I_{bg})$, where $I_{bg}$ is the intensity of the background noise of the replay field 509.

A second control image feature 519a is also shown in Figure 5, arranged within the picture area 511a. The second control image feature 519a results in a second image conjugate 519b (or simply a second conjugate) symmetrically about the DC spot 516. The second control image feature 519a and its associated second conjugate 519b can be used as an alternative to the first control image feature 517a and corresponding first conjugate 517b. In this case, a third light detector is located in a third light detection area 520a to be able to measure the "generator" intensity $I_B$ of the second control image feature 519a, whilst a fourth light detector is located in a fourth light detection area 520b to be able to measure the "conjugate" intensity $I_{B'}$ of the second image conjugate 519b. The conjugate contrast $C_{conj}$ of the replay field 509 can then be found using the formula: $C_{conj} = (I_B - I_{bg}) / (I_{B'} - I_{bg})$.

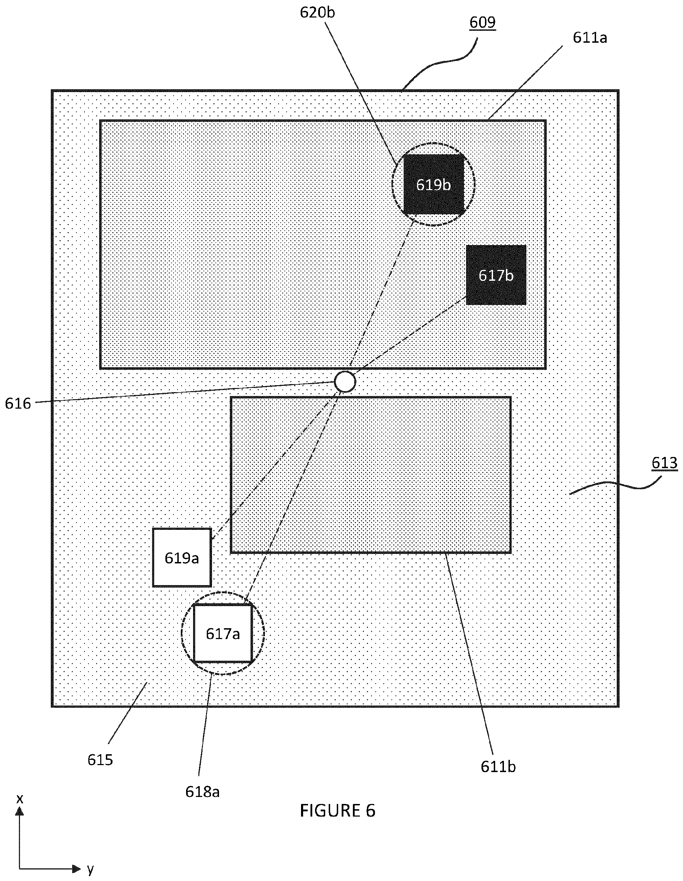

However, due to distortions imparted on the conjugates of the replay field 509 by the system forming said replay field 509, the conjugates 517b, 519b do not always appear at the locations expected when arranging the corresponding first and second control image features 517a, 519a. This is discussed in relation to the schematic holographic reconstruction (or replay field) according to a first embodiment of the present disclosure shown in Figure 6.

In Figure 6, as in Figure 5, a replay field 609 comprises two picture areas 611a, 611b (or image regions), with the area outside of the picture areas 611a, 611b being referred to generally as the non-picture area 613. Also as in Figure 5, the non-picture area 613 comprises a noise area 615 that comprises noise. At the centre of the replay field 609 is the DC spot 616. As with Figure 5, the replay field 609 in Figure 6 is schematic and so the shape and number of the picture areas 611a, 611b and the non-picture area 613 may be different. In other words, the two picture areas 611a, 611b shown in Figure 6 is a design choice.

As in Figure 5, a first control image feature 617a (a first feature) is arranged (or formed) within the non-picture area 613. Without distortion of the conjugates by the optical system, the first control image feature 617a would result in a first image conjugate at expected location 619b (or simply a first conjugate) symmetrically about the DC spot 616. However, due to the aforementioned optical distortion present in the system responsible for formation of the replay field 609, then the first image conjugate is instead present in a different location 617b. This distorted location 617b may be in any number of locations, including those translated or rotated on the replay field 609. The distorted location 617b may also be scaled (positively or negatively) with respect to its expected size.

By locating the distorted location 617b and calculating effect that the distortions have had on the expected symmetry of the conjugates about the DC spot 616, a corrected location 619b can be determined - i.e. the location at which a second control image feature 619a produces a conjugate at the expected location 619b.

As in Figure 5, a first light detector is located in a first light detection area 618a to be able to measure the "generator" intensity $I_A$ of the first control image feature 617a. According to the prior art (as seen in Figure 5), a second light detector would be located in a second light detection area 620b to be able to measure the "conjugate" intensity $I_{A'}$ of the first image conjugate at location 619a. However, due to the distortions imparted on conjugates of the replay field 609 by the optical system forming said replay field 609, the first image conjugate has instead been formed at location 617b, and so the second light detector would not be able to measure the conjugate intensity $I_{A'}$ of the first image conjugate.

Instead, the inventors have surprisingly found that arranging the second control image feature 619a as described above such that it produces a second image conjugate at the expected location 619b can then be used to measure the conjugate contrast $C_{conj}$. The second light detector measures the conjugate intensity $I_{B'}$ of the second image conjugate 619b. The conjugate contrast $C_{conj}$ of the replay field 609 can then be found using the formula: $C_{conj} = (I_A - I_{bg}) / (I_{B'} - I_{bg})$.

The inventors have found that, going against the commonly held beliefs in the field of holography, that this formula produces accurate results as compared to the formulas of $C_{conj} = (I_A - I_{bg}) / (I_{A'} - I_{bg})$ and $C_{conj} = (I_B - I_{bg}) / (I_{B'} - I_{bg})$ as discussed in relation to Figure 5.

The inventors have recognised that, because they found that a mismatched primary (e.g. $I_A$) and conjugate intensity (e.g. $I_{B'}$) can be used to make sound or accurate assessments of the replay field (e.g. contrast), significant improvements (e.g. simplifications or enhancements) to the system and method of assessing the holographic replay could be made. For example, when a matched primary (e.g. $I_A$) and conjugate (e.g. $I_{A'}$) are used to assess the holographic replay field, the only solution to a misalignment problem is to move at least one of the detectors. Importantly, the primary image and conjugate image may not be properly mirrored about the DC spot because of optical distortion. However, because the inventors have discovered that using a mismatched pair is adequate, they devised a new method in which a second position for a second primary image feature (corresponding to $I_B$) is determined in order to create a second conjugate (corresponding to $I_{B'}$) at the correct location of the second detector. Because of the degree of freedom introduced by this approach, many further possibilities are unlocked - such as using other detectors of the system for this additional purpose and/or circumventing the need for a dedicated alignment module with translatable detector(s) that must be removed prior to run-time operation. Notably, the approach devised by the inventors breaks the connection between the location of the primary image and corresponding conjugate image previously thought to be necessary for assessment of the holographic replay field.

In accordance with the present disclosure, the measurement of the conjugate contrast $C_{conj}$ can be continuously taken over time, even if the aforementioned optical distortions of the system forming the replay field 509 change over time. By detecting where the first image conjugate 617b is formed and determining the nature of the distortion, the second control image feature 619a can always be arranged in a location that ensures that the second image conjugate 619b is formed so that its intensity $I_{B'}$ can be measured by the second light detector.

The system is also not restrained by the locations of the light detectors. As the control image features 617a, 619a can be arranged in any location on the replay field 609, so can the second image conjugate 619b. This allows complete freedom of location of the light detectors, as the locations of the measured first control image feature 617a and second image conjugate 619b can be computationally altered during the formation of the hologram to counteract any distortion imparted on the conjugates by the optical system (even if this distortion changes over time).

The intensity ratio of the replay field 609 (which may be the conjugate contrast $C_{conj}$ of the replay field 609) may be used to calculate and set a contrast of the holographic replay field. As each line of pixels of the replay field 609 in the y-direction changes in the x-direction (due to angular dependence of the light forming each point of said replay field 609), an average value may have to be chosen for the entirety of the replay field 609. There are several ways this average may be determined. This includes: choosing a intensity ratio based on control image features placed in a user's/viewer's most common eyeline; taking an average intensity ratio using control image features placed halfway up the replay field 609 in the x-direction (i.e., control image features having the same x-coordinates as the DC spot 616); or taking an average intensity ratio using an array of image features arranged across the replay field 609.

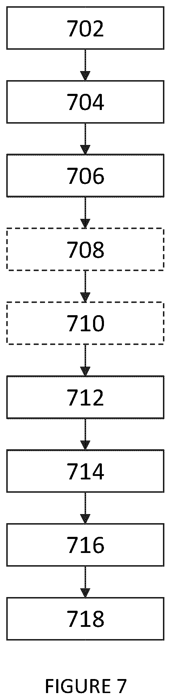

An example method of measuring the conjugate contrast $C_{conj}$ of the replay field 609 will now be discussed in relation to Figure 7.

Step 702 of the method comprises forming the replay field 609 as discussed above in relation to Figure 6.

Step 704 of the method comprises arranging (or displaying) the first control image feature 617a. That is, the hologram is calculated such that a small group of pixels forms the small area of light that makes up the first control image feature 617a. As discussed above, this naturally forms the first conjugate at the distorted location 617b due to the aforementioned optical distortions through the optical system forming the replay field 609.

Step 706 of the method comprises measuring an intensity $I_A$ of the first control image feature 617a using a first light detector in a first light detection area 618a. The first light detector is fixed at the location of the first control image feature 617a.

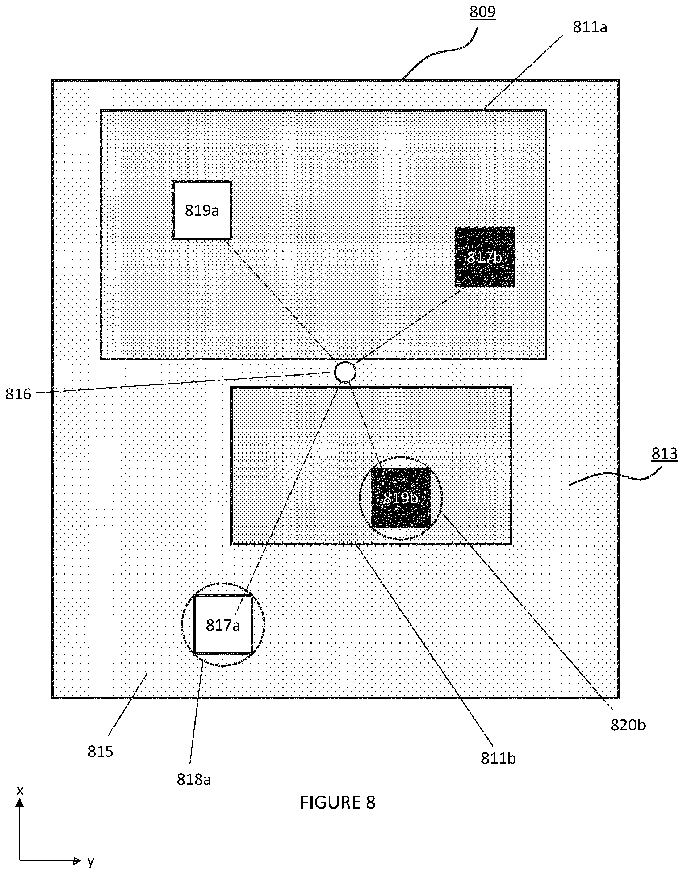

Step 708 of the method comprises measuring an intensity at the expected location 619b of the first image conjugate using a second light detector in a second light detection area 620b, however this step may be skipped if it is assumed that the above-described optical distortion will have caused the first conjugate to instead be formed at distorted location 617b. This will be discussed in greater detail below with respect to Figure 8.

Step 710 of the method comprises comparing the intensity at the expected location 619b of the first image conjugate to a set threshold value. If the intensity is below the threshold value, the first conjugate is not at the expected location 619b. As with step 708, this step can be skipped if it is assumed that the above-described optical distortion will have caused the first conjugate to instead be formed at distorted location 617b (as discussed below with respect to Figure 8).

Step 712 of the method comprises determining the positioning of distorted location 617b on the replay field 609 and using this location 617b (compared to the expected location 619b) to determine the nature of the distortion imparted on the conjugates by the optical system forming the replay field 609. In some embodiments, the location 617b is determined by scanning the replay field 609 in the x and y dimensions of the plane of the replay field 609 (as per Figure 6) and recording the peak in intensity in each dimension. Using simple geometry the location 617b can then be determined. To make this process easier and quicker, only a sub-area (for example a quadrant) of the replay field 609 can be scanned, the sub-area containing an estimated distorted location.

Step 714 of the method comprises displaying the second control image feature 619a such that the second conjugate 619b is formed at the second light detection area 620b, i.e. the location of the second light detector. This is achieved using the distortion determined in step 712 to adjust the location at which the second control image feature 619a is formed.

Step 716 of the method comprises measuring an intensity $I_{B'}$ of the second image conjugate 619b using the second light detector at the second light detection area 620b.

Finally, step 718 of the method comprises calculating the conjugate contrast $C_{conj}$ of the replay field 609 using the intensities $I_A$, $I_{B'}$ measured by the first and second light detectors alongside the background intensity $I_{bg}$ of the replay field 509. This is using the formula: $C_{conj} = (I_A - I_{bg}) / (I_{B'} - I_{bg})$.

A schematic holographic reconstruction (or replay field) according to a second embodiment of the present disclosure is shown in Figure 8. A replay field 809 with two picture areas 811a, 811b, a non-picture area 813, a noise area 815 and a DC spot 816 is formed as in Figure 6. As with Figure 6, the replay field 809 in Figure 8 is schematic and so the shape and number of the picture areas 811a, 811b and the non-picture area 813 may be different. As with Figure 5, the number and shape/size of the picture areas 811a, 811b is a design choice.

As in Figure 6, a first control image feature 817a (a first feature) is arranged within the non-picture area 813. The optical distortion of the conjugates present in the system responsible for formation of the replay field 809 causes the corresponding conjugate to appear at a distorted location 817b. As in Figure 6, this distorted location 817b may be in any number of locations, including those translated or rotated on the replay field 809. The distorted location 817b may also be scaled (positively or negatively) with respect to its expected size. The locations of the first and second light detection areas 818a, 820b (and hence the first and second light detectors) are fixed in place relative to the replay field 809, for example to accommodate the placement of these detectors in the housing of the replay field 809.

However, in this embodiment, the fact that there will be optical distortion of the location of the conjugate is presumed. As such, the test measurement of the second light detector (to check if the location of the first image conjugate has been distorted) is not performed. Instead, the second control image feature 819a is arranged without such a test, such that it results in a corresponding conjugate at location 819b to be measured by the second light detector. As in the first embodiment of Figure 6, the location of the formation of the second control image feature 819a is determined by locating the distorted location 817b of the second image conjugate and comparing this with the expected location 819b to determine the distortion imparted upon the conjugates by the system.

The intensities $I_A$, $I_{B'}$ of the first control image feature 817a and the second image conjugate 819b are then measured by the first and second light detectors and are used alongside the background intensity $I_{bg}$ of the replay field 809 to determine the conjugate contrast $C_{conj}$ of the replay filed 809 using the formula: $C_{conj} = (I_A - I_{bg}) / (I_{B'} - I_{bg})$. This is as per the first embodiment of Figure 6.

As with Figure 6, the Figure 8 is schematic in nature, and so the exact size and location of the various areas (and the aspect ratios between them) may differ in real-world implementations, as would be understood by the skilled person. To be clear, whilst Figure 6 shows the first and second control image features 617a, 619a in the non-picture area 613 and Figure 8 shows a first control image feature 817a in the non-picture area 813 and a second control image feature 819a in a picture area 811a, these first and second control image features 617a, 619a, 817a, 819a may be arranged anywhere within the replay field 809. That is, for example, both first and second control image features 617a, 619a, 817a, 819a may be in one (maybe even the same) picture areas 611a, 611b, 811a, 811b. Similarly, whilst only two control image features are shown, any number of such features may be used, arranged irregularly or in an array.

Additional features

Examples describe illuminating the SLM with visible light but the skilled person will understand that the light sources and SLM may equally be used to direct infrared or ultraviolet light, for example, as disclosed herein. For example, the skilled person will be aware of techniques for converting infrared and ultraviolet light into visible light for the purpose of providing the information to a user. For example, the present disclosure extends to using phosphors and/or quantum dot technology for this purpose.

Some arrangements describe 2D holographic reconstructions by way of example only. In other arrangements, the holographic reconstruction is a 3D holographic reconstruction. That is, in some arrangements, each computer-generated hologram forms a 3D holographic reconstruction.

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

**Claims**

1. A method for determining an intensity ratio of a holographic replay field, the method comprising:

   forming a holographic replay field at a plane comprising a housing, wherein the holographic replay field comprises an image area and a non-image area;
   displaying a first feature at a first position of the holographic replay field;
   measuring an intensity $I_A$ of the first feature using a first light detector, wherein the first light detector is disposed on the housing;
   displaying a second feature at a second position of the holographic replay field, wherein the second feature is substantially identical to the first feature and forms a conjugate at the position of a second light detector, wherein the second light detector is disposed on the housing;
   measuring an intensity $I_{B'}$ of the conjugate image of the second feature using the second light detector; and
   calculating a ratio of the intensities $I_A$, $I_{B'}$ of the first feature and the conjugate image of the second feature.

2. The method as claimed in claim 1, further comprising, between the steps of measuring the intensity $I_A$ of the first feature and displaying the second feature:

   measuring an intensity $I_{A'}$ using the second light detector, wherein the second light detector is aligned with an expected location of the image conjugate of the first feature; and
   detecting a low signal from the second light detector, wherein a low signal is a signal having an amplitude or magnitude less than a threshold value.

3. The method as claimed in claim 1 or claim 2, wherein the ratio of the intensities $I_A$, $I_{B'}$ of the first feature and the conjugate image of the second feature is the conjugate contrast $C_{conj}$ of the holographic replay field.

4. The method as claimed in any preceding claim, wherein the step of calculating the ratio of the intensities $I_A$, $I_{B'}$ of the first feature and the conjugate image of the second feature is found by: $C_{conj} = (I_A - I_{bg}) / (I_{B'} - I_{bg})$, where $I_{bg}$ is the intensity of the background noise of the holographic replay field.

5. The method as claimed in any preceding claim, wherein at least one of the first or second position is in the non-image area, optionally wherein both the first and second positions are in the non-image area.

6. The method as claimed in any preceding claim, wherein the second position is determined by:

   a) measuring the intensity of the holographic replay field in a first and second direction;
   b) determining the peak intensities in each of the first and second directions; and
   c) deriving the second position from the measured peak in the first and second directions;

   optionally wherein the intensity of step a is measured in proximity of the expected location where the conjugate should appear.

7. The method as claimed in any preceding claim, wherein the expected location of the image conjugate of the first feature is symmetrical about the DC spot with respect to the location of the first feature.

8. The method as claimed in any preceding claim, wherein the first light detector is aligned with the first feature

9. The method as claimed in any preceding claim, wherein the housing comprises a transmission area substantially aligned with the image area and a non-transmission area substantially aligned with the non-image area.

10. The method as claimed in any preceding claim, wherein the intensity measured by the first and/or second light detector is additionally used to monitor the intensity of the colour balance of the holographic replay field and/or calibrate the reference voltage VCOM of a liquid crystal device used to form the holographic replay field and/or optimise gamma of the liquid crystal device used to form the holographic replay field.

11. A holographic projection system comprising:

    a light source arranged to output light;
    a housing
    a display device arranged to display a diffractive pattern comprising a hologram of a target image and to receive light from the light source and output spatially modulated light in accordance with the diffractive pattern to form a holographic replay field of the target image at a replay plane, wherein the housing is located at the replay plane, wherein the holographic replay field comprises an image area and a non-image area, the display device arranged to display a first feature at a first position of the holographic replay field;
a first light detector disposed on the housing;
a second light detector disposed on the housing; and
a processor arranged to:

    measure an intensity $I_A$ of the first feature using the first light detector;
    display a second feature at a second position of the holographic replay field, wherein the second feature is substantially identical to the first feature and forms a conjugate at the position of the second light detector;
    measure an intensity $I_{B'}$ of the conjugate image of the second feature using the second light detector; and
    calculate a ratio of the intensities $I_A$, $I_{B'}$ of the first feature and the conjugate image of the second feature.

12. The holographic projection system as claimed in claim 11, wherein the processor is further arranged, between the steps of measuring the intensity $I_A$ of the first feature and displaying the second feature, to:

    measure an intensity $I_{A'}$ using the second light detector, wherein the second light detector is aligned with an expected location of the image conjugate of the first feature; and
    detect a low signal from the second light detector, wherein a low signal is a signal having an amplitude or magnitude less than a threshold value.

13. The holographic projection system as claimed in claim 11 or claim 12, wherein at least one of the first or second position is in the non-image area, optionally wherein both the first and second positions are in the non-image area.

14. A picture generating unit comprising the holographic projection system of any of claims 11 to 13.

15. A head-up display comprising the picture generating unit of claim 14.

FIGURE 1

230

210

202A

250

280A ← 253

256

259

→ ↓
213A    211A

FIGURE 2A

FIGURE 2B

FIGURE 2C

FIGURE 3

FIGURE 4

FIGURE 5

FIGURE 6

```
┌─────────────────┐
│       702       │
└─────────────────┘
         │
         ▼
┌─────────────────┐
│       704       │
└─────────────────┘
         │
         ▼
┌─────────────────┐
│       706       │
└─────────────────┘
         │
         ▼
┌ ─ ─ ─ ─ ─ ─ ─ ─ ┐
│       708       │
└ ─ ─ ─ ─ ─ ─ ─ ─ ┘
         │
         ▼
┌ ─ ─ ─ ─ ─ ─ ─ ─ ┐
│       710       │
└ ─ ─ ─ ─ ─ ─ ─ ─ ┘
         │
         ▼
┌─────────────────┐
│       712       │
└─────────────────┘
         │
         ▼
┌─────────────────┐
│       714       │
└─────────────────┘
         │
         ▼
┌─────────────────┐
│       716       │
└─────────────────┘
         │
         ▼
┌─────────────────┐
│       718       │
└─────────────────┘
```

FIGURE 7

FIGURE 8

| | Europäisches Patentamt European Patent Office Office européen des brevets | **EUROPEAN SEARCH REPORT** | **Application Number** EP 25 18 0182 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/342367 A1 (SEDER THOMAS A [US] ET AL) 27 October 2022 (2022-10-27) * paragraphs [0036] - [0052]; figures 2, 3, 6 * | 1-15 | INV. G03H1/04 G03H1/22 |
| A | ----- EP 3 686 692 A1 (DUALITAS LTD [GB]) 29 July 2020 (2020-07-29) * paragraphs [0090] - [0104], [0128] - [0134]; figure 4 * ----- | 1-15 | ADD. G03H1/08 G02B27/01 H04N9/31 |

TECHNICAL FIELDS SEARCHED (IPC)

G03H
G02B
H04N

The present search report has been drawn up for all claims

| Place of search | Date of completion of the search | Examiner |
|---|---|---|
| Munich | 9 October 2025 | Jarosch, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 0182

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | Publication date | Patent family member(s) | | Publication date |
|---|---|---|---|---|
| US 2022342367 A1 | 27-10-2022 | NONE | | |
| EP 3686692 A1 | 29-07-2020 | CN | 111486975 A | 04-08-2020 |
| | | EP | 3686692 A1 | 29-07-2020 |
| | | GB | 2580696 A | 29-07-2020 |
| | | PL | 3686692 T3 | 07-02-2022 |
| | | US | 2020241473 A1 | 30-07-2020 |
| | | US | 2024152093 A1 | 09-05-2024 |

EPO FORM P0459

For more details about this annex : see Official Journal of the European Patent Office, No. 12/82

**REFERENCES CITED IN THE DESCRIPTION**

**Patent documents cited in the description**

- GB 2552850 A
- GB 2498170 A
- GB 2501112 A